(19) Europäisches Patentamt / European Patent Office / Office européen des brevets

(11) **EP 4 124 473 A2**

(12) **EUROPEAN PATENT APPLICATION**

(43) Date of publication:
**01.02.2023 Bulletin 2023/05**

(21) Application number: **22186984.5**

(22) Date of filing: **26.07.2022**

(51) International Patent Classification (IPC):
**B60C 23/00** $^{(2006.01)}$    **B60C 23/10** $^{(2006.01)}$
**B60B 19/00** $^{(2006.01)}$

(52) Cooperative Patent Classification (CPC):
**B60C 23/002; B60C 23/004; B60C 23/10;**
B60B 19/00

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.07.2021  US 202163226326 P
02.03.2022  US 202263315634 P
27.04.2022  US 202263335260 P**

(71) Applicant: **Moetteli, John Travis
9320 Arbon (CH)**

(72) Inventor: **Moetteli, John Travis
9320 Arbon (CH)**

(74) Representative: **Mötteli-Mantelli, Novella
Da Vinci Partners LLC
Rathausgasse 1
9320 Arbon (CH)**

(54) **DYNAMIC TIRE PRESSURE REGULATION SYSTEM**

(57)    A system and method/apparatus are provided which dynamically and optionally automatically and individually adjust air pressure in the tire or tires of a vehicle. In one purely mechanical embodiment, the system is adapted for use with at least one tire mounted on a rim. The tire has an internal volume inflated with air. The rim is made up of two nested portions adapted such that relative rotation of the nested portions from a neutral position in which tire pressure is at a highest level causes a device in the system to increase the volume inside the tire so as to reduce the tire pressure, thereby increasing grip. The invention adjusts tire pressure quickly and dynamically, depending on braking or acceleration forces acting on the vehicle, and optionally, based on the terrain and the particular road or track conditions to which the vehicle is subjected.

FIG.1

EP 4 124 473 A2

## Description

## Cross Reference to Related Applications

This application claims the benefit of U.S. Provisional Application No. 63/226,326, filed July 28th, 2021, U.S. Provisional Application 63/315,634, filed March 2nd, 2022 and U.S. Provisional Application No. 63/335,260, filed April 22nd, 2022, the contents of the entirety of which are explicitly incorporated herein by reference and relied upon to define features for which protection may be sought hereby as it is believed that the entirety thereof contributes to solving the technical problem underlying the invention, some features that may be mentioned hereunder being of particular importance.

## Identification of parties concerned

The Applicant of the present patent application is John Travis Moetteli of Arbon, Switzerland, at the time of the first priority filing, 14 years of age.

## Background of the Invention

This invention relates to tire pressure regulation systems. The adherence or friction generated by tires with a road or track surface depends on the pressure with which they are inflated, since this pressure increases or decreases the contact surface with the surface on which these tires are rolling. Grip is a determining factor in vehicle safety and tire wear. It is known that the stopping distance can be cut by as much as 10m if the tires have the optimum pressure. The rate of acceleration of the vehicle can be dramatically increased as well.

Such systems, for example, available as an option on the Mercedes Unimog off road vehicle, allow the ability to reduce or increase the air pressure in all tires. A limitation of this device is that the air is fed and released through the tire valve, which, because of its limited capacity, results in a system that is sluggish, and which requires significant time to increase or decrease the tire pressure. In addition, the system is only able to adjust the pressure in all tires and not just selected tires that might have particular need of pressure adjustment.

Goodyear has also developed a tire pressure control system for large industrial transport rigs, in order to improve fuel efficiency by maintaining pressure within an optimal range.

What is needed is a system and method which, during driving, dynamically, essentially instantaneously depending on the momentary need, and optionally individually adjusts air pressure in the tire or tires of a vehicle. In particular, what is needed is a system and method for adjusting the tire pressure quickly, dynamically, depending on the terrain and the particular road or track conditions, as well as centripetal forces or breaking or acceleration forces. Still further, what is needed is a dynamic tire pressure adjusting system adaptable to the after-market use.

## Summary of the Invention

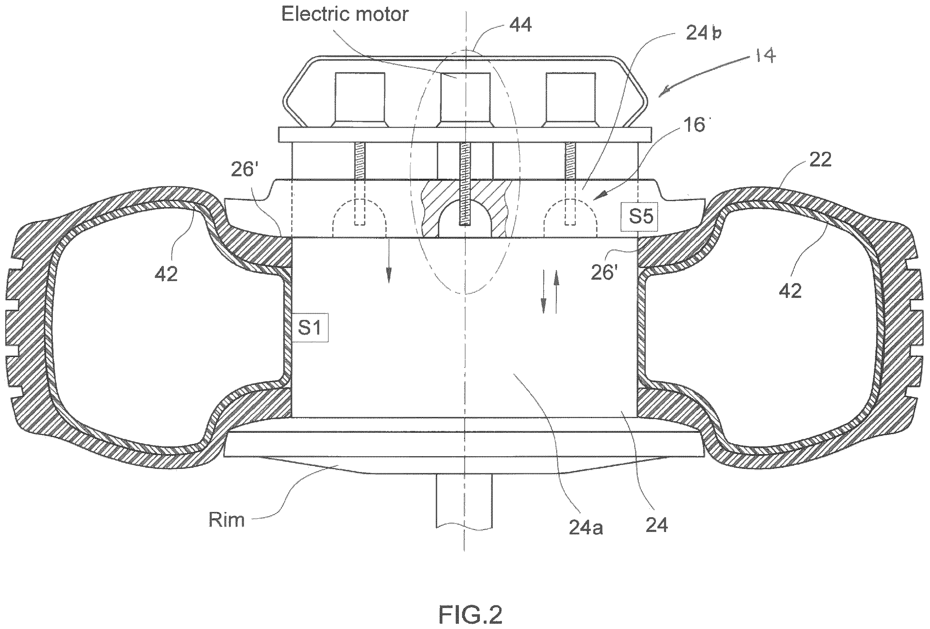

A system and method/apparatus are provided which dynamically and optionally automatically and individually adjust air pressure in the tire or tires of a vehicle. In one simple, purely mechanical embodiment, the system is adapted for use with at least one tire mounted on a rim. The tire has an internal volume inflated with air. The rim is made up of two nested portions adapted such that relative rotation of the nested portions from a neutral position in which tire pressure is at a highest level causes a mechanism in the system to increase the volume inside the tire so as to reduce the tire pressure, thereby increasing grip. Such a system, depicted in Figures 2 to 12C is adapted to after-market applications.

In one embodiment, the invention adjusts tire pressure quickly and dynamically, depending on braking or acceleration forces acting on the vehicle, and optionally, based on the terrain and the particular road or track conditions to which the vehicle is subjected.

The invention makes it possible to automatically, dynamically and essentially instantaneously adjust tire pressure, depending on torque applied to the wheels and/or the conditions of travel and use of the vehicle equipped with it. In addition, the invention, in some embodiments, has very little impact as possible on existing driving systems and is retrofittable to existing vehicles.

An object of the invention is to augment safety by increasing or decreasing friction between the tire(s) and the road or track surfaces. Braking distance, when combined with an ABS system, can be significantly reduced with the invention.

Another object of the invention is increase vehicle performance by providing friction conditions adapted to the forces acting on the vehicle while driving, which as in curves.

Still another object of the invention is the control of the footprint of a tire and the pressure distribution on the tire across its width, which, if controlled properly, can reduce wear between the edges and the middle of the tire road contact surface. This can extend the life of the tire.

**Brief Description of the Drawings**

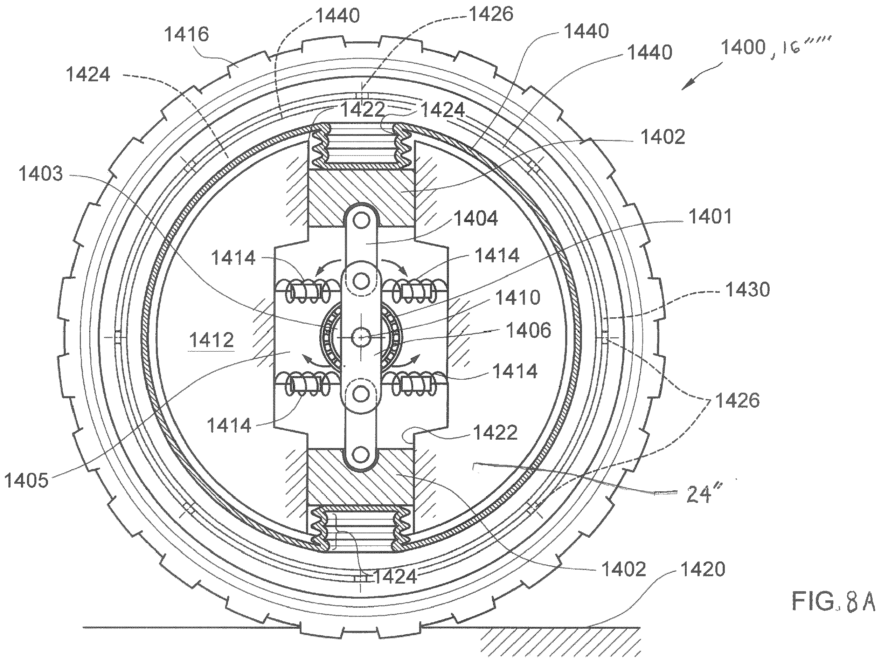

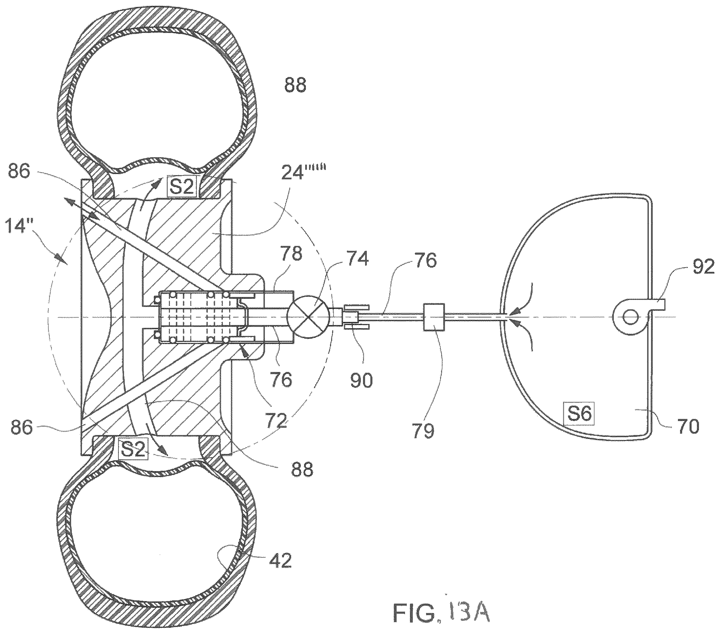

The attached drawings represent, by way of example, different embodiments of the subject of the invention, wherein probably the most practical implementations are represented by FIGs. 8A onwards, with a particularly interesting embodiment shown in FIG. 13A.

FIG. **1** is a perspective view of a vehicle using a first embodiment of the invention.
FIG. **2** is a cross-sectional view of the first embodiment of the invention.
FIG. **3A** is a perspective view of a second embodiment of the invention.
FIG. **3B** is a cross-sectional view of the second embodiment of the device of the invention.
FIG. **4A** is cross-sectional view of one variant of an actuator, a linear drive device, driven by an electric motor for use with the invention.
a perspective view of an actuator used in the invention.
FIG. **4B** is a cross-sectional view of a second variant of an actuator for use with the invention.
FIG. **4C** is a schematic view of a third variant of an actuator for use with the invention.
FIG. **4D** is a schematic view of a fourth variant of an actuator for use with the invention.
FIG. **5** is a perspective view of a fifth embodiment of the invention.
FIG. **6** is a perspective view of a sixth embodiment of the invention.
FIG. **7** is a perspective view of a seventh embodiment of the invention.
FIG. **8A** is a cross-sectional view of yet another embodiment of the invention using a piston arrangement.
FIG. **8B** is a cross-sectional view of yet another embodiment of the invention similar to that of FIG. **15A.**
FIG. **9** is a cross-sectional view of still another embodiment of the invention using a piston arrangement with bellows.
FIG. **10** is a cross-sectional view of yet another embodiment of the invention using another piston arrangement.
FIG. **11** is a cross-sectional view of yet another embodiment of the invention using another piston arrangement.
FIG. **12A** is a cross-sectional view of a further embodiment of the invention substituting a bladder or diaphragm arrangement for the piston arrangement.
FIG. **12B** is a cross-sectional view of the embodiment of FIG. **12A,** in a second operating position.
FIG. **12C** is a front view of the embodiment of FIG. **12A.**
FIG. **13A** is a cross-sectional view of an eighth embodiment of the invention using a reservoir and valve system.
FIG. **13B** is a close-up cross-sectional view of a valve of the eighth embodiment of the invention.
FIG. **14** is a schematic diagram of the system of one embodiment of the invention using sensors.
FIG. **15A** is a cross section of another embodiment of the invention in which the pump system thereof can also be applied to the embodiment of FIG. **13A.**
FIG. **15B** is a perspective view of the embodiment of FIG. **15A.**
FIG. **16** is a cross-sectional view of another embodiment of the invention in which the pump system thereof can also be applied to the embodiment of FIG. **13A.**
FIG. **17** is a schematic diagram of the embodiment of FIGs. **15A** and **15B** and **16.**
FIG. **18** is a cross-sectional view of a further embodiment of the invention in which the pump system thereof can also be applied to the embodiment of FIG. **13A.**
FIG. **19** is a cross-sectional view of still another, simplified embodiment of the invention.

Further embodiments of the invention are described (in text and in sketches) in the appendix attached hereto.
Those skilled in the art will appreciate that elements in the Figures are illustrated for simplicity and clarity and have not necessarily been drawn to scale. For example, dimensions may be exaggerated relative to other elements to help improve understanding of the invention and its embodiments. Furthermore, when the terms 'first', 'second', and the like are used herein, their use is intended for distinguishing between similar elements and not necessarily for describing a sequential or chronological order. Moreover, relative terms like 'front', 'back', 'top' and 'bottom', and the like in the Description and/or in the claims are not necessarily used for describing exclusive relative position. Those skilled in the art will therefore understand that such terms may be interchangeable with other terms, and that the embodiments described herein are capable of operating in other orientations than those explicitly illustrated or otherwise described.

**Detailed Description of the Preferred Embodiment**

The following description is not intended to limit the scope of the invention in any way as it is exemplary in nature, serving to describe the best mode of the invention known to the inventors as of the filing date hereof. Consequently, changes may be made in the arrangement and/or function of any of the elements described in the exemplary embodiments disclosed herein without departing from the spirit and scope of the invention.

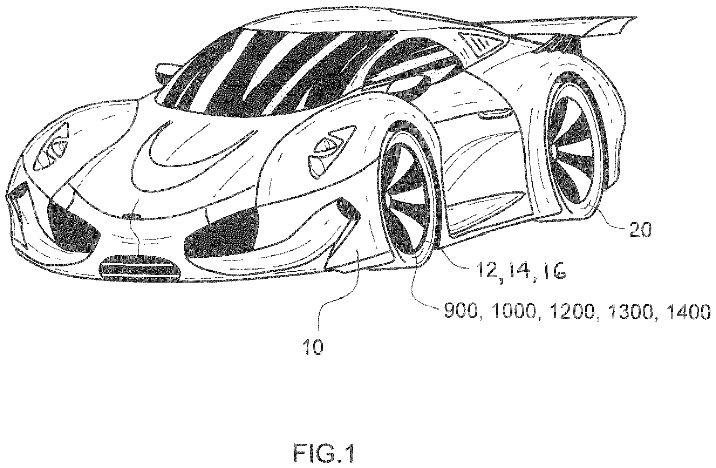

Referring now to FIG. **1**, an automobile 10, equipped with a dynamic tire pressure regulation system (DPR System) 12 of the invention is mounted. The DPR System 12 includes at least one displacement device 14 mounted in a wheel rim housing 16, which together act as the wheel rim 20 of the vehicle 10. Note that different variants of the above are shown by adding primes after the number or by following the reference number with a letter. Having the same base reference number indicates that the element referred to is a substitute for other elements marked with the same base reference number.

In general, the system 12 of the invention is adapted for use with at least one wheel 20, namely, a tire 22 mounted on a rim 24, 24', 24", 24‴, 24⁗, 24⁗′, 24″‴, 24‴″, 24⁗‴, 24⁗⁗ of the invention, wherein a displacement surface 26 or surfaces of a displacement device 16, 16', 16", 16‴, 16⁗, 16⁗′, 16″‴, 16‴″, 16⁗‴, 16⁗⁗ are adapted to deform the tire 22 or to change (displace) the tire's interior defining surfaces thereby changing a volume of air in the tire (which results in a change in pressure). Optionally a control device 30 for actuating the displacement device uses sensed parameters sensed by sensors s1, s2, s3, s4, and s5, optionally applying AI/deep learning algorithms 32, to configure and send command signals i/o to the system 12 of the invention so as to adjust a footprint 34 (not shown) of the tire 22 to suit the driving conditions or to adjust pressure to an acceptable range. The displacement device 16, 16', 16", 16‴ includes an actuator 36, 36', 36" which can be mechanical (thread, piston rod, or cam operated), electro-mechanical, electro-magnetic, and optionally a wireless data transmitter 40 activated by wireless signals.

Referring now to FIG. **2**, the displacement device 16 is a telescoping rim 24a, 24b and, in this case, the displacement surface or surfaces 26' are the portions of the rim 24 against which the tire mounts. In this embodiment, the displacement device is simplified.

In more detail, the system 12 according to this invention includes interlocking, expandable and contractable two part wheel rim components 24a, 24b on which a tire 22 preferably enclosing an inner tube 42, a wheel rim actuation device 44 (which moves the wheel rim components toward and away from each other according to a command from the control device 30), momentum sensors S3 (which sense momentum changes at braking, acceleration or in curves), data interfaces 46 between the sensors s1, S2, S3, s4, s5 and the control device 30 (which reads incoming data and sends signals to activate the rim activation device 44 so as to adjust the pressure of each tire 22 based on either AI algorithms, deep learning or the use of a lookup table or graphical methods.

In order to avoid the need to seal the two expandable and contractable wheel rim components 24a and 24b, the tire 22 encloses an inner tube 42.

In another embodiment, a tire deformation ring 15 has a displacement surface (26 for example) which presses against the sidewall (for example) of the tire 20 when actuated. In this embodiment, the displacement device 16' (for example) is separate from an essentially standard rim 24' (for example), the surface acting on either the sidewalls or the tread, preferably opposite to the tire road engagement surface or footprint of the tire.

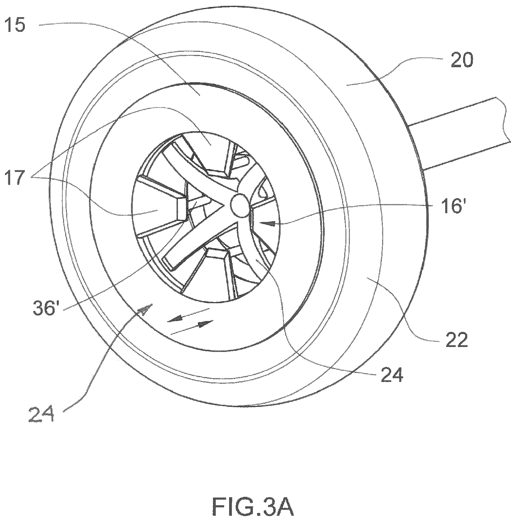

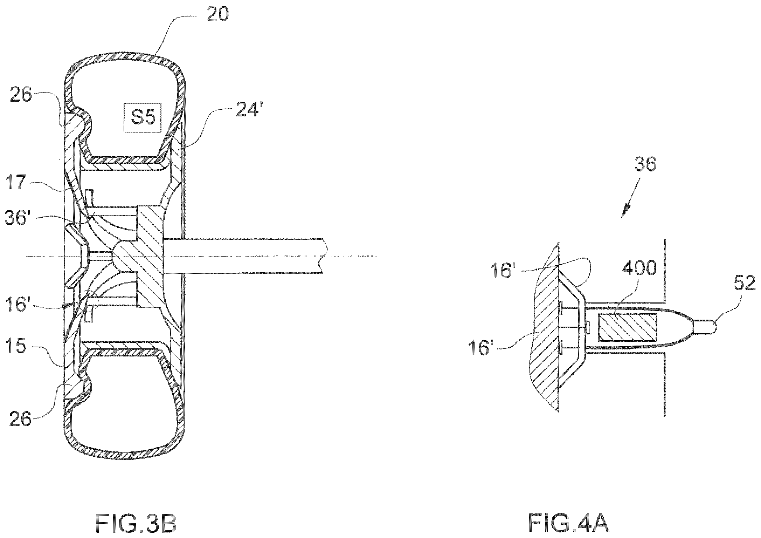

Referring now to FIG. **3A** and **3B,** in a sub-embodiment of the above embodiment, the displacement device 16' includes a tire deformation ring 15 actuated by actuators (36, 36'. 36") attached to inwardly directed ears 17 thereof. In this sub-embodiment, the displacement surface 26' is formed on the ring 15 and is smoothly convex extending from the ring so as to enable the ring to adequately deform the sidewall of the tire 20, in order to change its pressure in a manner that meaningfully changes the tire's footprint on the road surface.

The above embodiments have the distinct advantage that the tire pressure can be adjusted without continually and cyclically deforming the tire with each tire revolution, thereby avoiding unnecessary heat generation and hysteresis effects on the rubber. A simple adjustment can permanently adjust the pressure for mountain driving or straight-away highway driving.

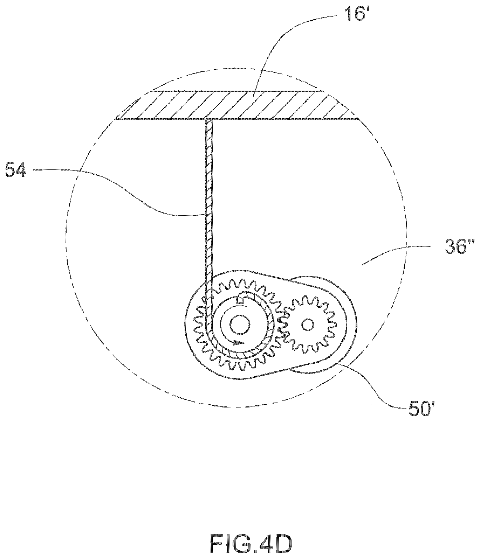

Referring now to FIG. **4A,** the actuation device 36 (variant 1) uses an electro-magnet to actuate the displacement device 16'. A metal loop 52 retains the displacement device 16' in place (so it doesn't simply fall off) yet allowing it to move laterally in a working range.

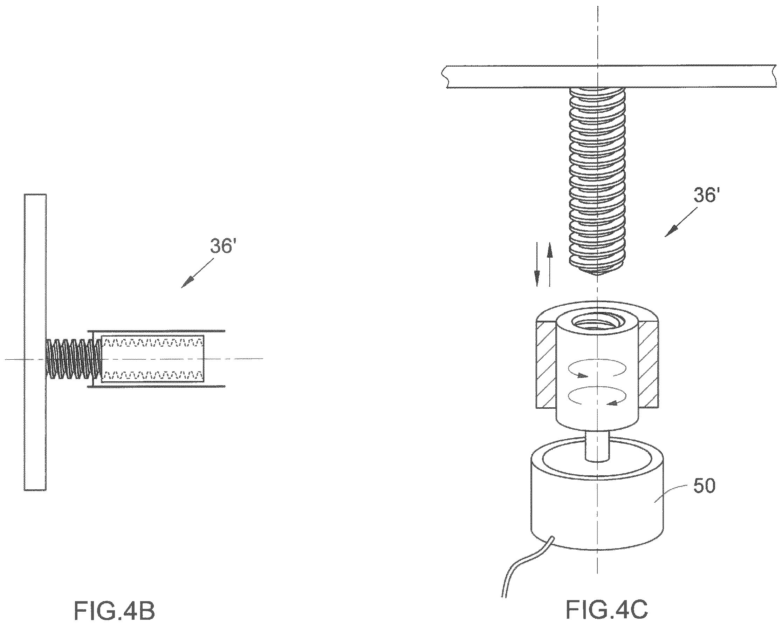

Referring now to FIG. **4B**, the alternate actuation device 36' is a thread system operated by a gear motor 50.

Referring now to FIG. **4C**, the second alternate actuation device 36" uses a gear motor 50' to draw up a cable 54 attached to the displacement device 16'.

In any of these embodiments, cams or other devices can also be used to actuate the various components.

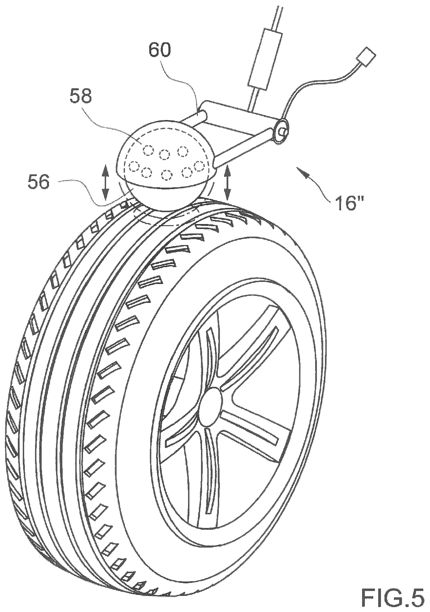

Referring now to FIG. **5**, in a second sub-embodiment, the displacement device 16" is a sphere 56 free to rotate on ball bearings contained in a spherical ball bearing holder 58 which actuates the sphere against and away from the tire by way of a linkage mechanism 60. When pressure is applied on the top of the tire, this increases the tire pressure. When pressure is released, this reduces the tire pressure. This sphere 56 is preferably located above the tire at a location that allows actuation against the tire throughout the range of swing of the tire during turning. A disadvantage of this embodiment however is that energy is required to deform the tire during normal driving conditions in which grip is not such much a safety factor. However, it is nevertheless advantageous where the driving conditions include many curves and where maximum speed cannot be attained. When the vehicle is again to be driven in highway conditions, the air pressure in the tires could be separately topped off.

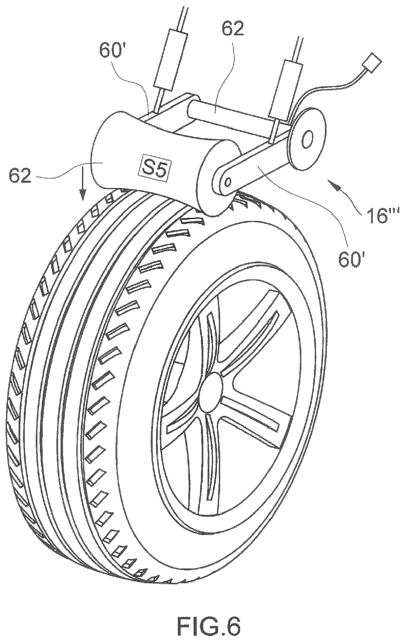

Referring now to FIG. **6**, in a third sub-embodiment, the displacement device 16‴ includes a cylindrical roller 62 attached to a lever connected to a frame 62 which moves with the wheel as the wheels turns left or right at the action of a steering wheel (advantageously, the cylinder is easier to suspend in a low friction manner and is simpler to construct than a spherical variant), wherein to control tire pressure, the roller 62 is controlled to press against the tire 20 and to release pressing against the tire. It too is supported by a linkage mechanism 60' that allows the cylinder to be actuated against the tire and released. Like the second sub-embodiment, a disadvantage is that energy is required to deform the tire during normal driving conditions in which grip is not such much a safety factor. However, it is nevertheless advantageous where the driving conditions include many curves and where maximum speed cannot be attained.

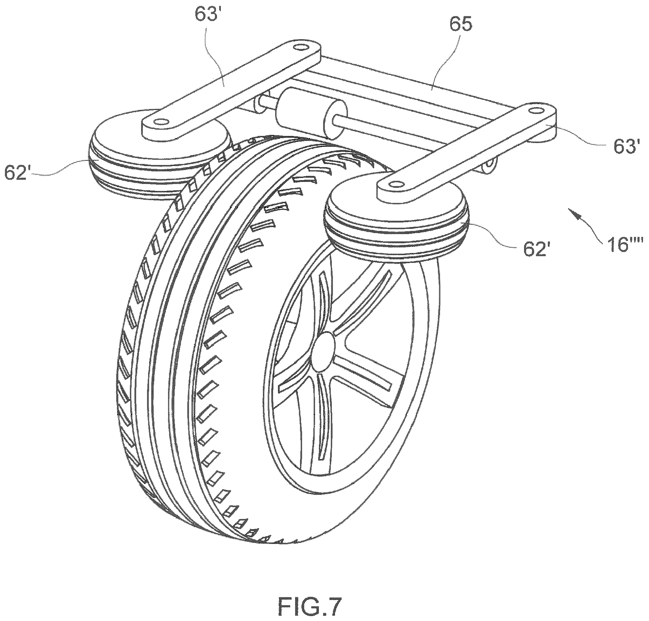

Referring now to FIG. **7**, in a fourth sub-embodiment, the displacement device 16‴" includes two rollers 62' attached to levers 63' connected to a frame 65' which moves with the wheel as the wheels turns left or right at the action of a steering wheel, wherein to control tire pressure, the rollers 62' are controlled to press against the tire 20 , for example, against the sidewalls and to release pressing against the tire. It too is supported by a linkage mechanism 63' that allows the rollers to be actuated against the tire and released. Like the second and third sub-embodiment, a disadvantage is that energy is required to deform the tire during normal driving conditions in which grip is not such much a safety factor. These embodiments depicted in FIGs **5-7** tend to heat the tire as the rubber deforms. Such heat further improves the grip of the tire and so is not detrimental. Such increased grip is advantageous where the driving conditions include many curves and where maximum speed cannot be attained.

A tire pressure regulation system including a mechanical means for controlling the volume of air within a tire activated by torque applied when accelerating or stopping

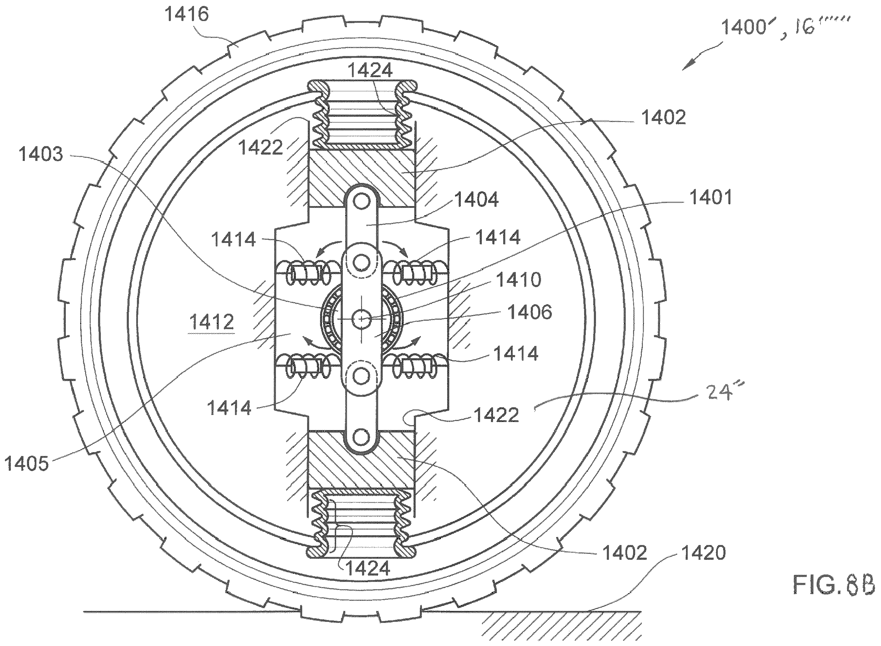

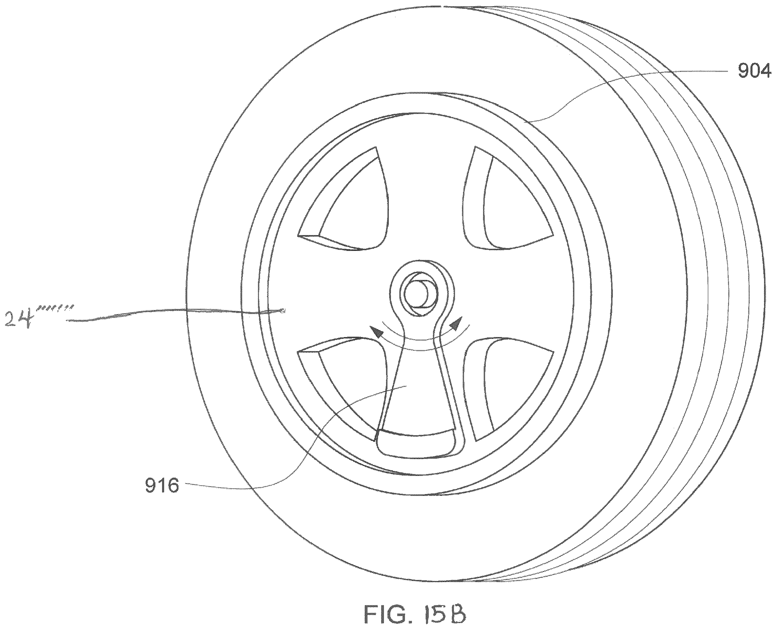

Referring now to FIG. **8A** and **8B** adaptable to fulfil an after-market rim niche, an alternate embodiment 1400 needs no air pump and no valve, and in fact, no active controller, but which wheel is made up of two nested portions 1401 and 1403 having bearing(s) 1405 or the like mounted therebetween, which are free to move a limited distance with respect to one another. This embodiment 1400 uses at least one piston 1402 (preferably at least two or more evenly spaced about the center of the wheel, quite easily four pistons) each optionally connected to a piston rod 1404 which is in turn connected to a crank 1406 (connected to the rotating axel) which rotates about the center 1410 of the wheel 1412. It is noted that the piston rod is optional because the actuation of the pistons of all embodiments using pistons in the instant application can be effectuated by actuators which are optionally controlled by a controller to suit the road conditions (wet, muddy, icy, acceleration, stopping, sharp turns, hot temperatures, etc.). Optional springs 1414, preferably with dampers, tend to maintain an equilibrium position in which the piston 1402 is at a high position in which the tire pressure is at a high point of Ph. In operation using the optional piston rod system, because the axel applies torque to the wheel through the dampened crank 1406, braking or accelerating causes a torque build-up which in turn causes the piston 1402 to retract to a more central position (and thereafter applying torque directly through the wheel to the ground), thereby essentially instantaneously sucking air out of the tire and reducing tire pressure and consequently, increasing the footprint of the tire 1416 on the road surface 1420. This action can significantly increase grip, which has the result of reducing stopping distance or increasing rate of acceleration. An optional inner tube or liner 1440 can be integral with the accordion diaphragm 1424 or separate therefrom. Where the accordion diaphragm 1424 is sealed to a corresponding opening in the wheel 1405 (see FIG. **15B**), an inner tube is completely optional but desirable to provide further assurance of no leakage. Where an inner tube is used, inner tube walls 1440 may contain any fluid, including a liquid (in which case a hydraulic system is provided). When the liquid is incompressible, a significant advantage is gained as essentially 1 to 1 displacement in the diaphragm 1424 causes volumetric increases or decreases in the tire and so essentially instantaneous adjustment of pressure as well as a reduction in the amount of fluid that needs to be displaced in order to result in a significant adjustment in tire pressure.

By "essentially instantaneously" it is meant the time required for the rim to turn relative to the axle so as to drawn down the piston or other internal volume altering mechanism, which typically can be accomplished in the time required for the rim or wheel to turn a quarter turn relative to the axle at any given speed. The approximate time can easily be calculated and varies depending on the speed of the wheel, the faster the wheel is turning, the quicker the one quarter turn is accomplished. For example, for a speed of 50km/hr, and a tire of the size where ¼ of its circumference is approx. 0.5m, then the time to activate the device to effectively reduce tire pressure is 0.036 seconds, or 36 milliseconds.

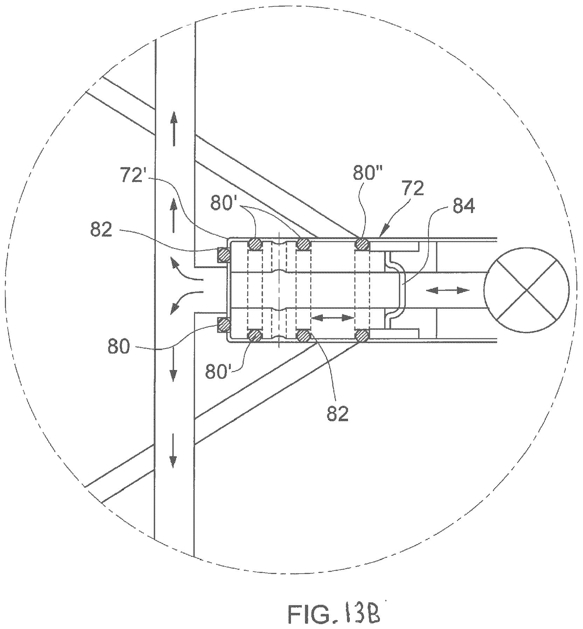

In order to calculate approximately how much tire pressure can be reduced "essentially instantaneously", we consider the displacement of each piston (such as the piston shown in Fig. 13), which is in the range of 10cm x 5cm (a maximum piston head top surface) x the stroke of about 5cm, which amounts to 250cm3, times 4 pistons, so 1000 cm3, which is one litre. We can calculate the volume inside a tire by calculating the volume difference between two cylinders, one representing the wheel and the other representing the tire mounted on the wheel. The volume of a cylinder is given by

$$V = \pi \times \text{radius}^2 \times \text{height}$$

Remember that radius is diameter ÷ 2. For the wheel, the volume is given by

$$\pi \times (4 \text{ dm} \div 2)^2 \times 1.5 \text{ dm} = 19 \text{ liters (cubic decimeters)}.$$

For the tire mounted on the wheel, the total volume is given by

$$\pi \times (5 \text{ dm} \div 2)^2 \times 1.5 \text{ dm} = 29 \text{ liters (cubic decimeters)}.$$

The volume difference is just 10 liters.

Because the volume of air in a typical tire is 10 litres, the system can at least reduce tire pressure essentially instantaneously by 10%. It can be imagined, however that 20% could be achieved using the principles taught in the instant application. Consequently, the invention can adjust the pressure of a tire during operation by 10%. A tire filled at 35psi therefore can have its pressure essentially instantaneously varied between 35psi and 31.5psi, which results in a substantial increase in grip.

Dzmitry Savitsky, Process Owner at Volkswagen AG, has performed studies with his team that have shown that a decrease in tire pressure improves braking in terms of stopping distance. According to the results of their experimental brake tests, the reduction of the tire pressure from 2.4 to 1.5 bar, reduced the stopping distance by 20% and increased the braking acceleration by 27%. Conversely, one can conclude that positive acceleration under these circumstances increases 27% as well. Using this as a benchmark, increasing volume by 10% would be the equivalent of reducing tire pressure from 2.4 bar to 2.2 bar. Assuming that stopping distance varies linearly from 2.4 to 1.5 bar, and assuming that an instantaneous 10% reduction in volume results in a linear reduction in stopping distance, then we can assume that the device of the invention can potentially reduce stopping distance by about one third of 20%, or by about 7%. Acceleration and deceleration are improved by about 9%. The typical braking distance for a car at 50mph is 38m, not including the time to react. See the below table:

Stopping distances at different speeds:

| Speed | Thinking + braking distance | Stopping distance |
|---|---|---|
| 20mph | 6m + 6m | 12m (40 feet) |
| 30mph | 9m + 14m | 23m (75 feet) |
| 40mph | 12m + 24m | 36m (118 feet) |
| 50mph | 15m + 38m | 53m (174 feet) |
| 60mph | 18m + 55m | 73m (240 feet) |
| 70mph | 21m + 75m | 96m (315 feet) |

Consequently, at 70mph, the device of the invention can reduce stopping distance by around 2.6 meters. As for acceleration, the device of the invention should improve acceleration over a distance of acceleration of 75m by almost 6.7m.

Optionally, to avoid the need to seal the piston 1402 completely against the piston cylinder surface 1422, a regular inner tube, known in the art, can be used. However, as shown, a modified inner tube 1422 having at least one accordion portion 1424, better ensures the reliable, long-term functioning of the system of the invention.

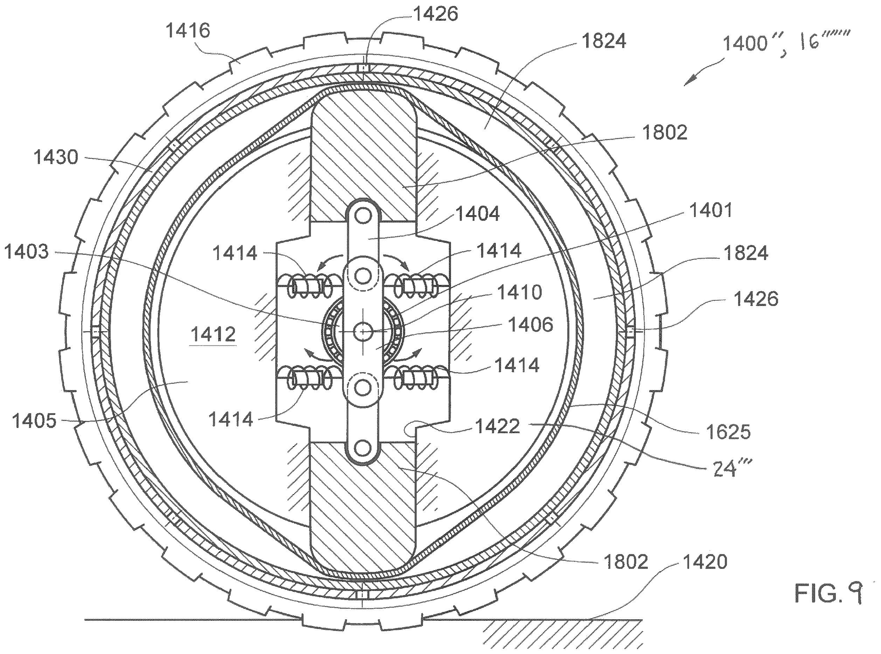

Referring now to FIG. **9**, an embodiment essentially identical to the above adaptable to fulfil an after-market rim niche, uses a solid piston 1802 that enters into the inside volume of the tire, preferably sealed via a standard inner tube 1625, provided one to one volumetric displacement of the air inside the tire, thereby rapidly adjusting pressure within adverse effects caused by the use of a compressible gas. Note however that immediately between the inner tube 1625 and the pistons, an expansion ring may be disposed in an alternate embodiment, which could be shown inn the drawing as a thin ring whose ends overlap and which is disposed along the radially inner surface of the wheel, with the center of the expansion ring being at the center of the tire. The expansion ring is of an overlapping spiral form and is made of flexible spring material, whose overall diameter decreases as the pistons are withdrawn, thereby allowing a radially inward floor (the out expansion ring surface) supporting the inner tube to retract and so increase the volume inside the tire. Of course, the shape, instead of conforming to the inside of the wheel and piston profile, would be more round than the inner tube 1625 (which is shown in FIG. **9** without the support of the expansion ring) and so support the inner tube to conform to a more rounded shape. Ideally, the expansion ring would be formed to be a rolled, expansion leaf spring of a ring form, which would expand based on the action of the pistons, and contract to its more at rest, relaxed position when the pistons are withdrawn, into an annular recess matching the width of the expansion ring and which extends along the entire inner circumference of the rim. The result of using this alternate embodiment is that the inner tube 1625 would be subjected to less stress concentrations and therefore be more robust, enjoying a longer life expectancy.

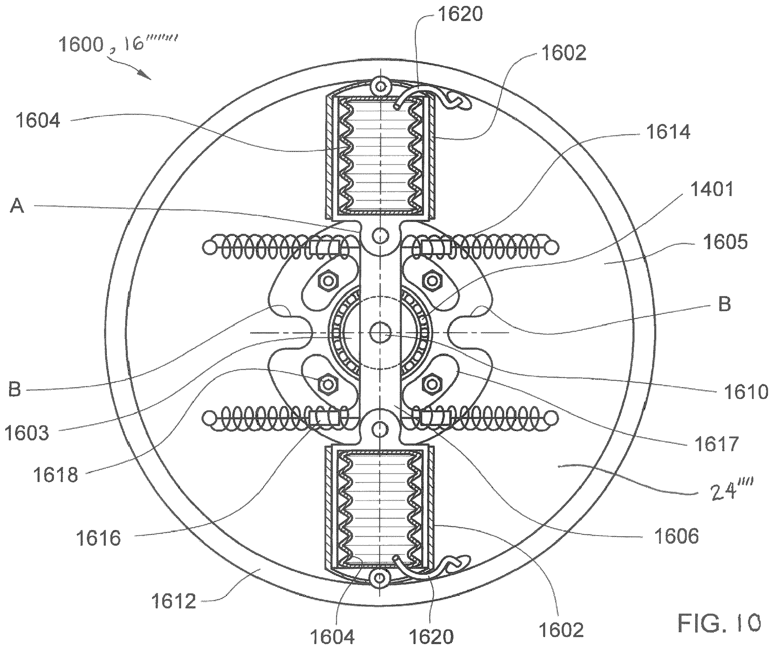

Referring now to FIG. **10**, an embodiment 1600 adaptable to fulfil an after-market rim niche which uses a modified piston system, includes typically at least two (for balance) but optionally three or more tilting, nested cylinders 1602 enclosing an accordion diaphragm 1604. The nested cylinders 1602 optionally are made of transparent material so as to reveal the inner mechanism. Like the embodiment of FIG. **8A**, **8B**, **9**, this embodiment 1600 needs no air pump and no valve, and in fact, no active controller, but which wheel is made up of two nested portions 1603 and 1605 between which bearing(s) 1401 are mounted, which are free to rotate a limited angle with respect to one another. As mentioned, this embodiment 1600 uses at least one pair of nested cylinders 1602 (preferably at least two or more evenly spaced about the center of the wheel, quite easily four pistons) each connected to a piston rod 1606 which is in turn connected to the rotating axel, typically via the lugs 1618, which rotates about the center 1610 of the wheel 1612. Springs 1614, preferably with dampers 1616, seek to maintain an equilibrium position in which the pair 1602 of nested cylinders is at a high position in which the tire pressure is at a high point of Ph. Note that thought has been given to provide slotted openings 1617 that allow access to the lugs 1618. In operation, because the axel and inner portion 1603 apply torque to the outer portion 1605 of the wheel 1612 through the dampened crank 1606, braking or accelerating causes a torque build-up which in turn causes the nested cylinders 1602 to retract with one end moving toward the center of the wheel (and eventually applying torque directly through the wheel to the ground as the surface A reaches the stop surface B), thereby reducing tire pressure and consequently, increasing the footprint of the tire 1616 on the road surface 1420. Where the accordion diaphragm 1604 is completely open to the inside of the tire, as shown in FIG. **8A** and **8B**, air is quickly removed from within the tire which deflation of the tire significantly increases grip, which has the result of reducing stopping distance or increasing rate of acceleration. Of course, the larger the tube or channel 1620, the quicker the transfer of fluid from within the tire to the accordion diaphragm 1604 and vice versa. Here too, the fluid can be a liquid.

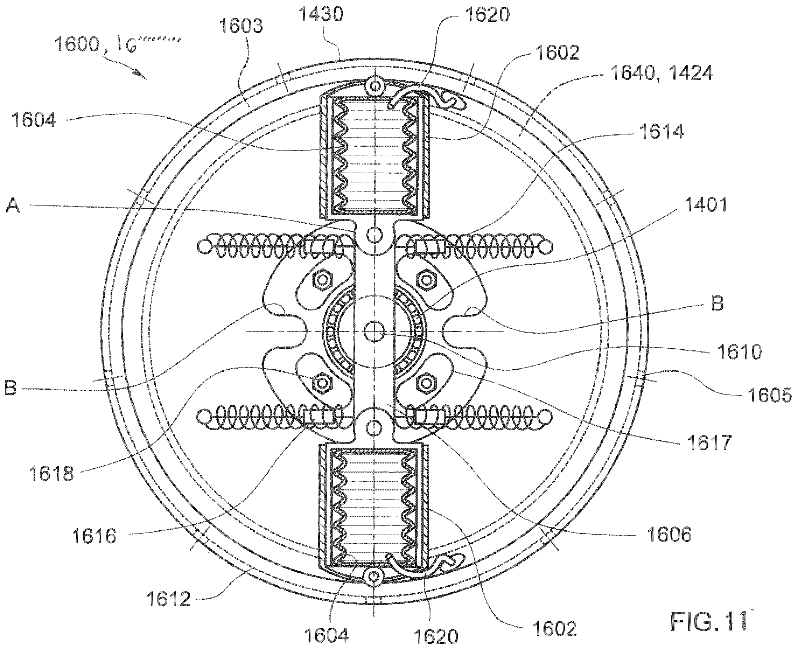

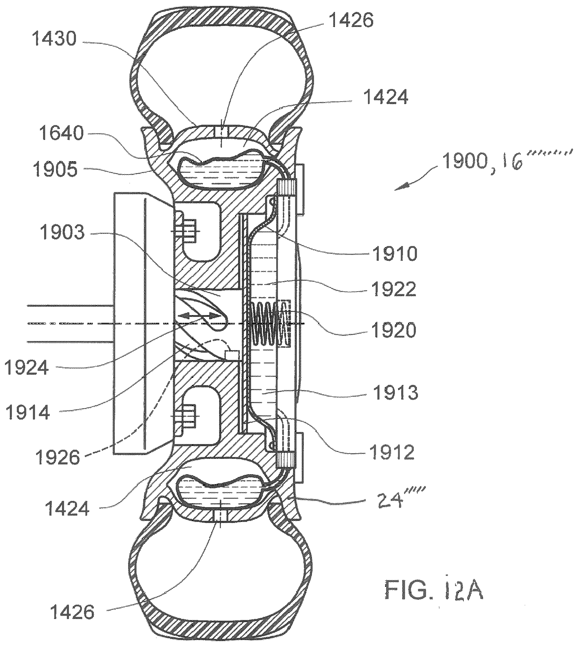

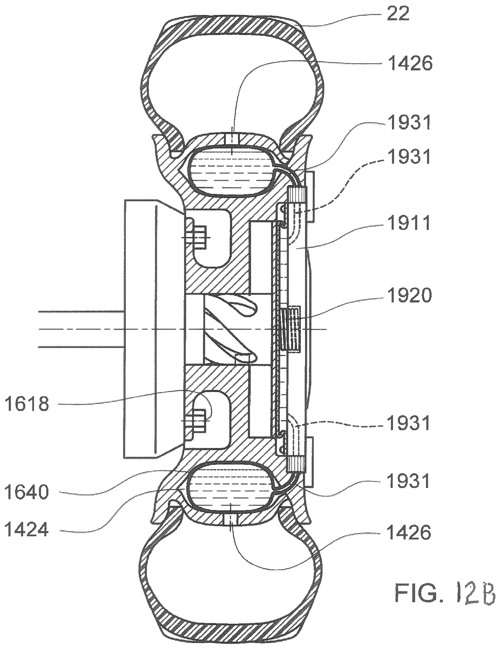

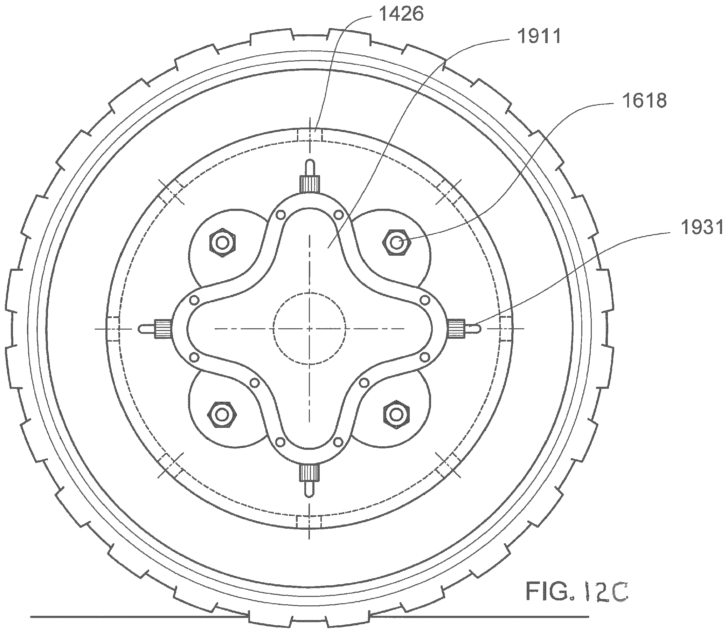

Referring now to FIG. **11**, an embodiment is shown which is adaptable to fulfil an after-market rim niche. In this figure, dashed lines show the outline of a structure shown more clearly in FIGs **12A** and **12B**, which is essentially the same optional cavity 1424 shown in FIGs. **8A**, **11** and **12A** and **12B**, this cavity having a wall 1430 being open-to-the-inside-of-the-tire via openings 1426. This embodiment is particularly adapted to a hydraulic system in which an essentially incompressible liquid is moved to and from, via the accordion diaphragm 1604 into and out of an inner tube 1640 disposed in a cavity 1424, 1824 open to the interior of the tire 22.

It should be noted that with the hydraulic embodiments described herein, there will be a tendency at high speeds for the liquid in accordion diaphragm 1604 or the chamber 1922 to enter the interior tire volume and therefore increase tire pressure.

It can be appreciated that many other devices can be used to replace the need for a piston 1402, 1802, 1602. An expansion ring or a diaphragm (such as 1910 shown in FIGs. **12A** to **12C** described below) can be used.

Referring now to FIGs. **12A** to **12C**, FIGs. **12A** and **12B** are cross-sectional views of a further embodiment 1900 of the invention adaptable to fulfil an after-market rim niche. This embodiment 1900 is essentially the same as that shown in **8A**, **8B**, **9** to **11** as to the filling of an inner tube 1440, in the cavity 1640, except that the piston-like devices 1402, 1424, 1602, of filling the inner tube has been replaced with a large central diaphragm 1910 which is moved by a plate 1912 connected to a plunger 1914. The diaphragm 1910 is sealed against a manifold 1911, thereby defining a fluid chamber 1922. The manifold 1911 has fluid passageways /tubes 1931 formed therein that permit fluid communication of the fluid chamber 1922 with the tube 1640 (not specifically drawn) in the cavity 1424 between the broken lines, the cavity having openings 1426 into the inner volume of the tire 22. The plunger 1914 is actuatable along the axis of the wheel, to the right and/or the left, and which can optionally be assisted by a spring 1920 optionally located within the fluid chamber 1922. The plunger 1914 optionally is cammed with cam slits 1924 by which a cam follower 1926 is constrained. Relative movement of an inner portion 1903 of the wheel to the outer portion 1905 causes the plunger 1914 to move axially to move the plate 1912 and diaphragm 1910 to pump the fluid 1913 into and out of the inner tube 1640.

Note that the purely mechanical embodiments disclosed herein can be augmented with sensors, pumps and controllers to maintain the maximum pressure in the tire. The mechanism itself then reduces the tire pressure from the maximum pressure to provide the improved grip.

In the above embodiments, the pistons may be activated by a controller based on inputs from sensors (e.g., the centripetal force sensors or accelerometers). However, in the embodiment associated with FIGs. **8A** to **9,** the pistons can be activated automatically and purely mechanically, at the time of need.

Of course, all of the above embodiments associated with FIG. **8A**

to **8C,** or functional elements thereof can be combined with the other embodiments mentioned above to control pressure depending on whether stopping, accelerating, or going into a curve, or when road conditions warrant it. For example, the accordion portion of FIG. **8A** which opens up into the inside of the wheel can also be separated and connected with a filling tube 1620 as shown in FIGs. **10** and **11.** The tube size (also of tube 1931) is preferably of a large diameter to accelerate fluid transfer and therefore improve reaction time.

Still further, all the remaining embodiments described in the instant disclosure can be combined with any of the above-described embodiments, thereby allowing a dual system of changing the internal tire volume for essentially instantaneous adjustment of tire pressure and an adjustment of the nominal tire pressure, such adjustment typically taking more time due to the need to pump fluids.

Referring now to FIGs. **13A** and **13B**, the dynamic tire pressure regulation system 12' for a vehicle 10 which regulates tire pressure by pumping air into and releasing air from within the tire includes an air pressure reservoir 70, the control device 30, at least one valve 72 in a custom rim 24", and a second valve 74 (which may be located anywhere on the vehicle). The air pressure reservoir 70 is optionally affixed to the vehicle 10, the reservoir being connected via pressure tubes or hoses 76 through the wheel axel 78 and optionally, a rotary pneumatic connection 79.

Referring to the close-up view, FIG. **13B**, the valve 72 is in the form of a cylindrical tube having O-rings 80 disposed in O-ring recesses 82. On one end 84, the valve 72 is connected to an air tube 76 which ultimately connects to the second valve 74. The control device 30 selectively turns on and off the valves 72 and 74 allows for the filling and deflating of the tire 20. The custom rim 24" includes air exhaust ports 86 and air inlet ports 88.

The valve 72 is moved back and forth by, for example, a cam 90 (or another suitable actuator). The movement of the valve 72 (for example, by cam 90), to the left, seals a front end of the valve against a first O-ring 80 and, upon opening of the second valve 74, allows filing of the tire while a third type of O-ring 80" prevents leakage of air through the exhaust ports 86. Movement of the valve 72 to the right, such that the end 72' passes the exhaust port 86 allows for the tire 20 to deflate. The control device 30 reads the pressure sensor s2 inputs to open and closes valves 72 and 74 in order to ensure that the tire quickly (in a matter of milliseconds) reaches the desired pressure, thereby providing a more optimal tire footprint for stopping, accelerating or taking a curve or for the road conditions (wet or dry, icy, muddy or challenging off-road conditions).

Preferably, the valve 72 has an air communication capacity much larger than a regular air ventil in a tire stem, thereby allowing pressure in the tire to be adjusted dynamically, quickly, at the command of the control device thus enabling the invention to adapt to the road and/or driving conditions (wet, muddy or icy road, cornering, stopping or accelerating). Optionally, the pressure reservoir 70 is affixed to a rim of the vehicle and so is dedicated to supplying air to the rim and tire combination to which it is affixed.

Optionally, the tire 20 includes an inner tube 42, thereby providing a minimum air pressure level in the tire, the system 12' increasing the pressure in the tire by pumping air between the inner tube and the inner wall of the tire or the rim.

Preferably, the reservoir 70 includes an electric air pump 92 to ensure that the reservoir has adequate pressure to operate the system 12' of the invention.

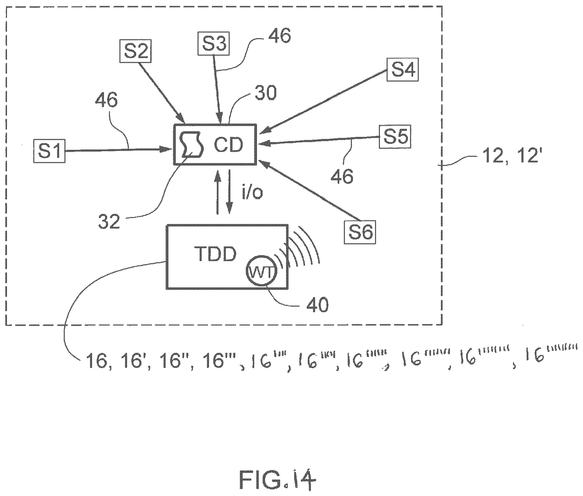

Referring now to the schematic diagram of FIG. **14**, the invention optionally includes a pressure sensor s1, s2 for sensing the pressure in the tire and data communication lines for connecting to the control device and for transmitting at least pressure data to the control device, and for receiving a control signal from the control device.

The control device 30 need not require inputs such as pressure, force or distance, but instead, merely transmits signals which cause the displacement device 16, 16'. 16", 16''' to move to known positions and optionally to stop or begin actuation based on local conditions for pressure, force or distance, thereby eliminating any need for a data transmitter.

The system 12, 12' of the invention optionally includes momentum sensors s3 that sense centripetal forces or inertial forces, which sensed data is transmitted to the control device for a determination of how to activate the system of the invention. The detection of centripetal forces that indicate a turn, the detection of braking forces or the detection of acceleration forces, cause tire pressure in the appropriate tire or tires to be reduced in order to increase the tire-road interface so as to increase the grip of the tire.

The system 12, 12' of the invention optionally includes a distance or location sensor s4 for sensing the distance travelled by an element of the displacement device or a location reached, which distance travelled or location reached can be correlated with tire air pressure or the tire footprint size, further including data communication lines for connecting to the control device and for transmitting at least distance data, and for receiving a control signal.

The system 12, 12' of the invention optionally includes a force sensor s5 for sensing the force applied to the tire by the displacement surface and further includes data communication lines for connecting to the control device and for transmitting at least force data, and for receiving a control signal.

Optionally, where a non-GPS speedometer is used, any change in diameter of the tire due to the deformation thereof is considered to re-calibrate the speedometer in order to provide accurate speed information.

The invention may also a system for maintaining the pressure in a tire within a range specified by a controller programmed at the factory or programmable by the user.

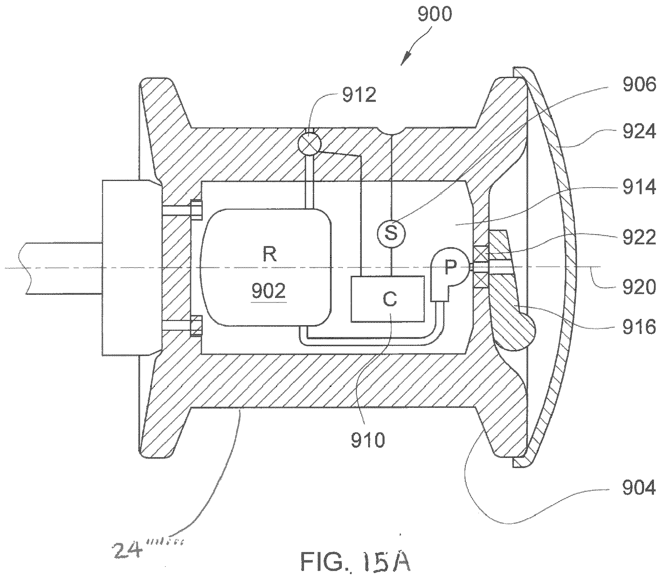

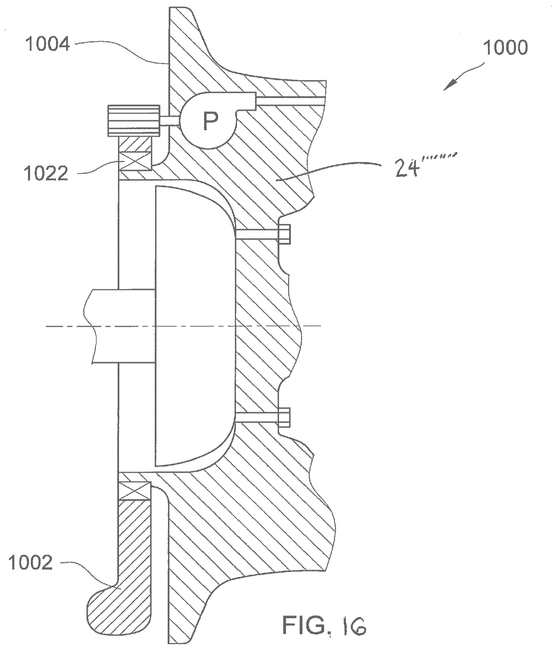

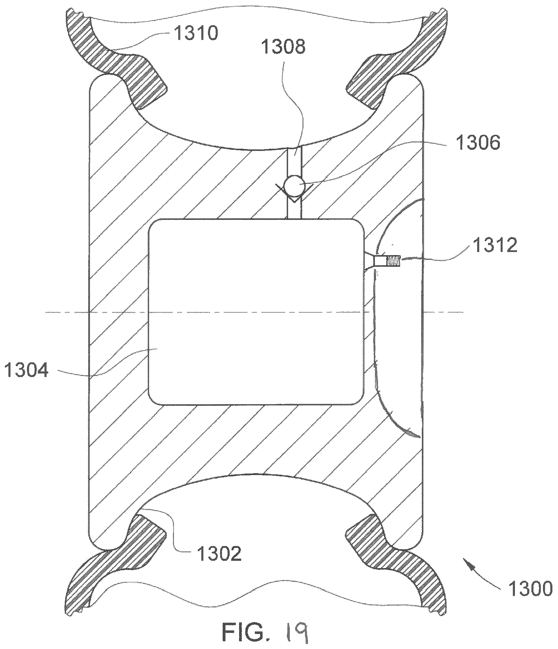

Referring now to FIGs. **15A**, **15B**, and **16**, in another embodiment 900 which regulates tire pressure by pumping air into and releasing air from within the tire, a reservoir 902 is located within the wheel 904. A pressure sensor 906 senses the pressure in the tire and when the pressure is too high, a controller 910 opens a valve 912 to eject air either into the environment or, if the pressure in the reservoir is lower than in the tire, into the reservoir. If the pressure in the reservoir is lower than in the specified range, the driver can be warned of the need to fill up the reservoir, in which case, no pump 914 is needed (See FIG. **19**). Preferably, however, a pump 914 activated by a pendulum 916 suspended about the axis 920 of the wheel 904, ensures that the reservoir 902 is maintained at a pressure P2 higher than the pressure PI which the user would like to maintain the tire pressure at.

Referring in particular to FIG. **15A** and **15B**, in one embodiment, the pendulum 916 is rotatably suspended on the outside face of the wheel and, by virtue of the fact that the wheel turns and the pendulum, which is weighted generally doesn't turn with the wheel, the pump 914 is activated. The pendulum 916 is connected to the pump 914 and suspended on low friction bearings 922. The pendulum 916 can be in the form of a clock pendulum (as also found in an automatic watch movement), or a flywheel which oscillates between two positions, dampened by a spring (typically a spiral spring, as more typically found in an automatic watch pendulum). A hubcap 924 can also be used to cover the pendulum and prevent it from being visible from the outside of the vehicle. Although some users will want the pendulum to not be visible from the outside of the vehicle (as in the next embodiment), many will find that the pendulum being visible is a symbol of the advanced technology the user has at his disposal on the vehicle.

Referring now to FIG. **16**, in another embodiment 1000 which regulates tire pressure by pumping air into and releasing air from within the tire, the pendulum 1002 is rotatably suspended on bearings 1022 on the inside face 1004, not visible from the outside of the vehicle and, by virtue of the fact that the wheel turns and the pendulum, which is weighted generally doesn't turn with the wheel, the pump is activated.

Note that in another embodiment, the pendulum can, in all embodiments, include a spring that limits the rotation thereof and promotes a back-and-forth oscillation like a clock pendulum or an automatic watch pendulum.

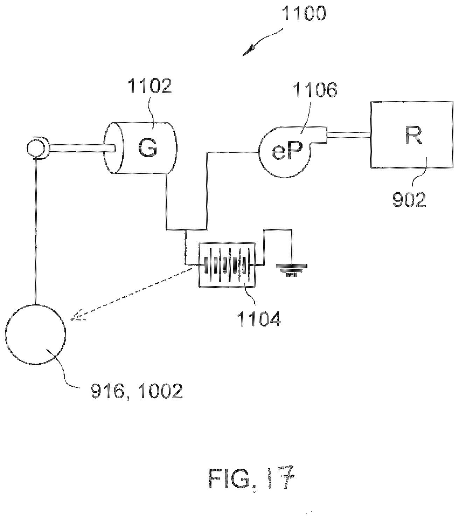

Referring now to FIG. **17**, in still another embodiment 1100 which regulates tire pressure by pumping air into and releasing air from within the tire, the pendulum 916, 1002 activates an electric generator 1102 which charges a battery 1104 in the wheel, which is available to activate an electric pump 1106 on demand of the user or a controller or both. The pump 1106 pumps up the reservoir 902 as needed or desired. The battery 1104 could serve as the weight at the outer extremity of the pendulum.

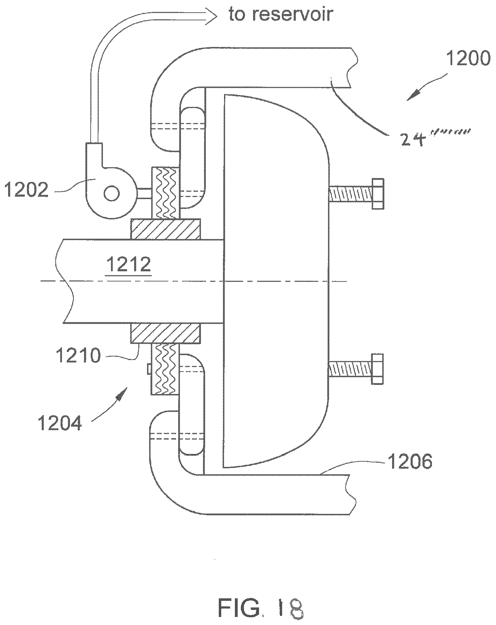

Referring now to FIG. **18**, an embodiment 1200 which regulates tire pressure by pumping air into and releasing air from within the tire is shown where no pendulum is needed. but instead, a mechanical pump 1202, located on the inside face 1204 of the wheel 1206, is activated by bearing against a race 1210 on the axle housing 1212 of the vehicle. The pump 1202 is activated when an engagement mechanism engages the pump with the race 1210 or with a drive train connected to the race.

Referring now to FIG. **19**, in a simple embodiment 1300 which regulates tire pressure by pumping air into and releasing air from within the tire, adaptable to fulfil an after-market rim niche, no pump, no controller, and no pendulum is needed. Instead, the wheel 1302 simply contains a high-pressure air reservoir 1304 having a mechanical one way or two-way valve 1306 set in a channel 1308 connecting the reservoir to the inside of the tire, the one-way valve releasing pressure into the tire 1310 through the channel 1308, when the pressure in the tire drops below a certain set level. Using a one-way valve, this can be accomplished using a spring of a spring constant that will yield. Of course, the mechanical valve can be replaced with a pressure sensor positioned to sense the pressure in the tire, which then activates (when the pressure in the tire drops below a desired minimum and/or closes the valve when it exceeds a maximum), mechanically or electrically, a valve that allows air from the reservoir, when its pressure is greater than that inside the tire, to enter the tire and so increase its pressure within a desired range. The reservoir 1304 would have a standard air valve 1312 exposed to enable the user to replenish the air in the high-pressure reservoir 1304.

The invention includes the following features sets:

1. A dynamic tire pressure regulation system adapted for use with at least one tire mounted on a rim, the tire being inflated with air at a tire pressure within a working range, the rim and tire combination defining an internal volume inside the tire, the system characterized in that the system includes a displacement mechanism adapted to, in reaction to vehicle acceleration or deceleration, essentially instantaneously increase the internal volume inside the tire so as to essentially instantaneously sufficiently reduce the tire pressure from a higher nominal pressure thereby increasing traction of the tire so as to improve safety.

2. The system of feature set 1, wherein the system is adapted to reduce tire pressure by at least 3%, preferably at least 5%, more preferably at least 7%, so as to improve traction within less than half a second and more preferably, within less than 50 milliseconds, depending on the internal volume change in the tire.

3. The system of feature set 1, further including a control device for actuating the displacement mechanism, optionally based on the sensed parameters, so as to adjust a footprint of the tire to suit the driving conditions or to adjust pressure to a desired range.

4. The system of feature set 1, wherein the displacement device includes an actuator selected from one of the group of actuators consisting of mechanical, electro-mechanical, electro-magnetic actuator, and, optionally, a wireless data transmitter activated by wireless signals.

5. The system of feature set 1, wherein the displacement device is a telescoping rim, and, in this case, the displacement surface or surfaces are the portions of the rim against which the tire mounts.

6. The system of the feature set immediately above, wherein the system is adapted for use with a tire including a tube to minimize seal requirements in the telescoping rim.

7. The system of feature set 1, wherein the displacement surface separate from an essentially standard rim and tire combination, the surface acting on either the sidewalls or the tread, preferably opposite to the tire road engagement surface.

8. The system of the feature set immediately above, wherein the displacement device is a sphere free to rotate on ball bearings contained in a spherical ball bearing holder which actuates the sphere against and away from the tire.

9. The system of the feature set immediately above wherein pressure applied on the top of the tire, controls the tire pressure.

10. The system of feature set 1, wherein the displacement device comprises a cylinder attached to a lever connected to a frame which moves with the wheel as the wheels turns left or right at the action of a steering wheel, wherein to control tire pressure, the cylinder is controlled to press against the tire and to release pressing against the tire.

11. The system of any one of the above feature sets, wherein the control device need not require inputs such as pressure, force or distance, but instead, merely transmits signals which cause the displacement device to move to known positions and optionally to stop or begin actuation based on local conditions for pressure, force or distance, thereby eliminating any need for a data transmitter.

12. The system of the feature set immediately above including a distance or location sensor for sensing the distance travelled by an element of the displacement device or a location reached, which distance travelled, or location reached can be correlated with tire air pressure or the tire footprint size.

13. The system of the feature set immediately above, further including data communication lines for connecting to the control device and for transmitting at least distance data, and for receiving a control signal.

14. The system of any one of the above feature sets including a force sensor for sensing the force applied to the tire by the displacement surface and further includes data communication lines for connecting to the control device and for transmitting at least force data, and for receiving a control signal.

15. The system of any one of the above feature sets, wherein, where a non-GPS speedometer is used, any change in diameter of the tire due to the deformation thereof is considered to re-calibrate the speedometer in order to provide accurate speed information.

16. A dynamic tire pressure regulation system for a vehicle including:

    a. an air pressure reservoir affixed to the vehicle, the reservoir being connected via pressure tubes or hoses through the wheel axels;
    b. a control device;
    c. valves adapted to be opened or closed by the control device, one valve preferably being located in a custom rim: and
    d. the custom rim including one or more air channels, wherein opening of the valve to a certain point (where ports in the valve are aligned with exhaust ports) ejects excess air in the tire into the atmosphere and closing the valve allows high pressure air to be injected and held in the tire, optionally in coordination with a separate valve upstream from the axel valve;

wherein the control device controls the axel valve and, optionally, the upstream valve to control the tire pressure and therefore the tire footprint on the road according to driving actions (turning, braking, or accelerating) and road conditions (wet or dry, icy).

17. The system of the above feature set, wherein the valve has an air communication capacity much larger than a regular air ventil in a tire stem, thereby allowing pressure in the tire to be adjusted dynamically, quickly, at the command of the control device thus enabling the invention to adapt to the road and/or driving conditions (wet or icy road, cornering, stopping or accelerating).

18. The system of any one of the two feature sets immediately above, wherein the pressure reservoir is affixed to a rim of the vehicle and so is dedicated to supplying air to the rim and tire combination to which it is affixed.

19. The system of any one of the three feature sets immediately above, wherein the tire includes an inner tube, thereby providing a minimum air pressure level in the tire, the device increasing the pressure in the tire by pumping air between the inner tube and the inner wall of the tire or the rim.

20. The system of any one of the feature sets immediately above including a pressure sensor for sensing the pressure in the tire and data communication lines for connecting to the control device and for transmitting at least pressure data to the control device, and for receiving a control signal from the control device.

21. The system of any one of the above feature sets, wherein the system includes momentum sensors that sense centripetal forces or inertial forces, which sensed data is transmitted to the control device for a determination of how to activate the system of the invention.

22. The system of the feature set immediately above, wherein the detection of centripetal forces that indicate a turn, the detection of braking forces or the detection of acceleration forces, cause tire pressure in the appropriate tire or tires to be reduced in order to increase the tire-road interface so as to increase the grip of the tire.

23. The system of any one of the above feature sets, wherein the control device uses AI/deep learning algorithms to optimize the control of the vehicle tire pressure, depending on the road conditions and the turning, stopping or acceleration of the vehicle.

24. A tire pressure regulation system adapted for use with at least one tire mounted on a rim, including an air channel extending from a centrally supplied air supply to the inner volume of the tire.

25. A tire pressure regulation system including a mechanical means for controlling the volume of air within a tire activated by torque applied when accelerating or stopping so as to reduce air pressure therein during peak application of the torque, thereby increasing the tire footprint and therefore tire grip.

26. The system of feature set 1, wherein the rim has two nested portions adapted such that relative rotation of the nested portions from a neutral position in which tire pressure is at a highest level causes the system to increase the volume inside the tire so as to reduce the tire pressure, thereby increasing grip.

27. The system of any one of the above feature sets, combined with a module for pumping air in the tire to adjust nominal pressure.

In an advantage, the invention augments safety by increasing or decreasing friction between the tire(s) and the road or track surfaces. Braking distance, when combined with an ABS system, can be significantly reduced with the invention.

In another advantage, the invention increases vehicle performance by providing friction conditions adapted to the forces acting on the vehicle while driving, which as in curves.

In still another advantage, the invention controls the footprint of a tire and the pressure distribution on the tire across its width, which, if controlled properly, reduces wear between the edges and the middle of the tire road contact surface. This can extend the life of the tire.

It should be appreciated that the particular implementations shown and herein described are representative of the invention and its best mode and are not intended to limit the scope of the present invention in any way.

It should be appreciated that many applications of the present invention may be formulated. One skilled in the art will appreciate that the network may include any system for exchanging data, such as, for example, the Internet, an intranet, an extranet, WAN, LAN, wireless network, satellite communications, and/or the like. It is noted that the network may be implemented as other types of networks, such as an interactive television network. The users may interact with the system via any input device such as a keyboard, mouse, kiosk, personal digital assistant, handheld computer, cellular phone and/or the like. Moreover, the system contemplates the use, sale and/or distribution of any goods, services or information having similar functionality described herein.

As will be appreciated by skilled artisans, the present invention may be embodied as a system, a device, or a method.

The present invention is described herein with reference to block diagrams, devices, components, and modules, according to various aspects of the invention. It will be understood that each functional block of the blocks diagrams, and combinations of functional blocks in the block diagrams, can be implemented by computer program instructions which may be loaded onto a general purpose computer, special purpose computer, or other programmable data processing apparatus to produce a machine, such that the instructions which execute on the computer or other programmable data processing apparatus create enable the functionality specified in the block diagrams.

Accordingly, the block diagram illustrations support combinations of means for performing the specified functions, combinations of steps for performing the specified functions, and program instruction means for performing the specified functions. Each functional block of the block diagrams and flowchart illustrations, and combinations of functional blocks in the block diagrams, may be implemented by either special purpose hardware-based computer systems which perform the specified functions or steps, or suitable combinations thereof.

Moreover, the system contemplates the use, sale and/or distribution of any goods, services or information having similar functionality described herein.

The specification and figures should be considered in an illustrative manner, rather than a restrictive one and all modifications described herein are intended to be included within the scope of the invention claimed. Accordingly, the scope of the invention should be determined by the appended claims (as they currently exist or as later amended or added, and their legal equivalents) rather than by merely the examples described above. Steps recited in any method or process claims, unless otherwise expressly stated, may be executed in any order and are not limited to the specific order presented in any claim. Further, the elements and/or components recited in apparatus claims may be assembled or otherwise functionally configured in a variety of permutations to produce substantially the same result as the present invention. Consequently, the invention should not be interpreted as being limited to the specific configuration recited in the claims.

Benefits, other advantages and solutions mentioned herein are not to be construed as critical, required or essential features or components of any or all the claims.

As used herein, the terms "comprises", "comprising", or variations thereof, are intended to refer to a non-exclusive listing of elements, such that any apparatus, process, method, article, or composition of the invention that comprises a list of elements, that does not include only those elements recited, but may also include other elements such as those described in the instant specification. Unless otherwise explicitly stated, the use of the term "consisting" or "consisting of" or "consisting essentially of' is not intended to limit the scope of the invention to the enumerated elements named thereafter, unless otherwise indicated. Other combinations and/or modifications of the above-described elements, materials or structures used in the practice of the present invention may be varied or adapted by the skilled artisan to other designs without departing from the general principles of the invention.

The patents and articles mentioned above are hereby incorporated by reference herein, unless otherwise noted, to the extent that the same are not inconsistent with this disclosure.

Other characteristics and modes of execution of the invention are described in the appended claims.

Further, the invention should be considered as comprising all possible combinations of every feature described in the instant specification, appended claims, and/or drawing figures which may be considered new, inventive and industrially applicable.

Additional features and functionality of the invention are described in the claims appended hereto and/or in the abstract. Such claims and/or abstract are hereby incorporated in their entirety by reference thereto in this specification and should be considered as part of the application as filed.

Multiple variations and modifications are possible in the embodiments of the invention described here. Although certain illustrative embodiments of the invention have been shown and described here, a wide range of changes, modifications, and substitutions is contemplated in the foregoing disclosure. While the above description contains many specific details, these should not be construed as limitations on the scope of the invention, but rather exemplify one or another preferred embodiment thereof. In some instances, some features of the present invention may be employed without a corresponding use of the other features. Accordingly, it is appropriate that the foregoing description be construed broadly and understood as being illustrative only, the spirit and scope of the invention being limited only by the claims which ultimately issue in this application.

## Claims

1. A dynamic tire pressure regulation system 12, 12' adapted for use with at least one tire 20, 22, 1310 mounted on a rim 24, 24', 24", 24"', 24"", 24""", 24"""", 24""""", 24"""""", 24""""""', the tire 20, 22, 1310 being inflated with air at a tire pressure within a working range, the rim 24, 24', 24", 24"', 24"", 24""", 24"""", 24""""", 24"""""", 24""""""' and tire 20, 22, 1310 combination confining a volume of air inside the tire 20, 22, 1310, the system 12, 12' **characterized in that** the system 12, 12' includes a displacement device 16, 16', 16", 16"', 16"", 16""", 16"""", 16""""", 16"""""", 16""""""' adapted to, in reaction to at least vehicle acceleration and/or deceleration, essentially instantaneously increase the internal air volume inside the tire 20, 22, 1310 so as to essentially instantaneously sufficiently reduce the tire pressure from a higher nominal pressure thereby increasing traction of the tire 20, 22, 1310 and so improving safety.

2. The system of claim 1, wherein the system is adapted to reduce tire pressure by at least 3%, preferably at least 5%, more preferably at least 7%, so as to improve traction within less than half a second and more preferably, within less than 50 milliseconds, depending on the internal volume change in the tire.

3. The system of claim 1, further including a control device for actuating the displacement device, optionally based on the sensed parameters, so as to adjust a footprint of the tire to suit the driving conditions or to adjust pressure to a desired range.

4. The system of claim 1, wherein the displacement device includes an actuator selected from one of the group of actuators consisting of mechanical, electro-mechanical, electro-magnetic actuator, and, optionally, a wireless data transmitter activated by wireless signals.

5. The system of claim 1, wherein the displacement device is a telescoping rim wherein the displacement surface or surfaces consist of select portions of the rim against which the tire mounts.

6. The system of the claim immediately above, wherein the system is adapted for use with an innertube to minimize seal requirements in the telescoping rim.

7. The system of claim 1, wherein the system comprises nested interlocking portions adapted such that relative rotation of the nested portions from a neutral position in which tire pressure is at a highest level causes the system to increase the volume inside the tire so as to reduce the tire pressure, thereby increasing grip.

8. The system of claim 1, wherein the displacement device is separate from an essentially standard rim and tire combination, the device acting on either the sidewalls or the tread, preferably well away from the road engagement surface.

9. The system of the claim immediately above, wherein the displacement device is a sphere free to rotate on ball bearings contained in a spherical ball bearing holder which is actuatable to move the sphere against and away from the tire.

10. The system of the claim immediately above wherein the displacement device applies pressure on the top of the tire thereby controlling tire pressure.

11. The system of claim 1, wherein the displacement device comprises a hydraulic cylinder attached to a lever connected to a frame which moves with the wheel as the wheels turns left or right as controlled by a steering wheel, wherein to control tire pressure, the cylinder is controlled to press against the tire and to release pressing against the tire.

12. The system of any one of the above claims 8 to 11 including a force sensor for sensing the force applied to the tire by the displacement device and further includes data communication lines for connecting to a control device and for transmitting at least force data, optionally interpolated into pressure data, and for receiving a control signal.

13. The system of claim 1, wherein the tire includes an inner tube that seals that portion of the volume within the tire containing air, thereby providing a minimum air pressure level in the tire, the device changing the volume of air by pumping an incompressible fluid between the inner tube and the inner wall of the tire or the rim.

14. The system of any one of the above claims 3 or 12, wherein the control device uses AI/deep learning algorithms to optimize the control of the vehicle tire pressure, depending on the road conditions and the turning, stopping or acceleration of the vehicle.

15. The system of any one of the above claims, combined with a module for pumping air into and releasing air from the tire to adjust nominal pressure.

FIG.1

10

20

12, 14, 16

900, 1000, 1200, 1300, 1400

Electric motor

44

24b

14

26'

16'

42

S5

26'

S1

42

Rim

24a

24

FIG.2

EP 4 124 473 A2

FIG.3A

FIG.3B

FIG.4A

FIG.4C

FIG.4B

16'

36"

50'

54

FIG.4D

FIG.5

FIG.6

FIG.7

FIG. 8A

EP 4 124 473 A2

EP 4 124 473 A2

1416

1400´, 16´´´´´´

1424

1422

1403

1402

1404

1401

1414

1414

1410

1406

1412

1414

1414

24´´

1405

1422

1402    1420

1424

FIG. 8B

FIG. 9

EP 4 124 473 A2

FIG. 10

1640, 1424
1614
1401
B
1610
1605
1617
1606
1602
1602
1620
1620
1430
1604
1603
1600, 1G
1604
A
1612
1616
1618
B

FIG. 11

FIG. 12A

FIG. 12B

EP 4 124 473 A2

FIG. 12C

FIG. 13A

FIG. 13B

FIG. 14

FIG. 15A

EP 4 124 473 A2

FIG. 15B

EP 4 124 473 A2

FIG. 16

FIG. 17

EP 4 124 473 A2

FIG. 18

FIG. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63226326
- US 63315634
- US 63335260